# EUROPEAN PATENT SPECIFICATION

(11) **EP 1 621 433 B1**
(45) Date of publication and mention of the grant of the patent: **07.03.2007**
(21) Application number: 04017806.3
(22) Date of filing: 28.07.2004
(51) Int. Cl.: B60T 8/26, B62L 3/08

(54) **Braking system for all terrain vehicle**
Bremssystem für ein Geländefahrzeug
Système de freinage pour véhicule tous terrains

(43) Date of publication of application: 01.02.2006
(73) Proprietor: AEON MOTOR Co., Ltd., Shan-shang, Hsiang-Tainan Hsien (TW)
(72) Inventor: Chung, Allen, Shan-shang Hsiang Tainan Hsien (TW)
(74) Representative: Garavelli, Paolo

(56) References cited:
- FR-A- 2 843 349
- US-B1- 6 478 103

## Description

The present invention refers to a braking system, particularly for off-road vehicles more commonly known as "All Terrain Vehicles" (herein below ATV).

ATVs are generally four-wheel-drive vehicles, provided with a saddle and handlebar similar to motorcycle ones, and they are designed to be used particularly on rugged and rough terrains. An ATV braking system operation is particular, and related to the specificity of its employment. On its handlebar, an ATV is provided with a right braking lever adapted to operate the front wheel braking, a left braking lever adapted to operate the rear wheel braking and, typically on the right side of a feet supporting platform, a braking pedal adapted to contemporarily operate front and rear wheel braking. In the prior art (see, for example, FR-A-2 843 349), such mechanism is realized by means of connector sets of operating cables which are extremely complex as regards both assembling and possible adjustments and following reparations. Besides, such complexity of the known systems very often also negatively affects their reliability, and accordingly, the intrinsic safety which derives from malfunctioning braking systems. Besides, it is evident that particularly complex systems and kinematic motions are consequently also expensive.

Object of the present invention is providing a braking system for All Terrain Vehicles (ATV) which is mechanically simpler and more reliable compared with known systems.

Another object of the present invention is providing a braking system for All Terrain Vehicles (ATV) which is simpler to be adjusted and to be repaired compared with known systems.

Moreover, an object of the present invention is providing a braking system for All Terrain Vehicles (ATV) which is more economic and safer compared with known systems.

The aforesaid and other objects and advantages of the invention, as they will result from the following description, are reached with a braking system for All Terrain Vehicles (ATV) as described in Claim 1. Preferred embodiments and non-trivial variations of the present invention are the subject of the dependent claims.

The present invention will be described better by some preferred embodiments thereof, given as non-limiting examples, with reference to the enclosed drawings, in which:
- FIG. 1 shows a schematic drawing of a known braking system for ATV;
- FIG. 2 shows a schematic drawing of a braking system for ATV according to the present invention;
- FIG. 3 shows a perspective exploded view of a braking system for ATV according to the present invention;
- FIG. 4 shows a top view of the assembled braking system for ATV of FIG. 3;
- FIG. 5 shows a side view of the assembled braking system for ATV of FIG. 3;
- FIG. 6 shows a schematic drawing of a braking system for ATV operated by means of a braking pedal;
- FIG. 7 shows a side view of the braking system for ATV according to the present invention with the main parts interested by braking pedal driving underlined;
- FIG. 8 shows a side view of the braking system for ATV of FIG. 7 during the braking pedal driving;
- FIG. 9 shows a schematic drawing of a braking system for ATV operated by means of a left braking lever;
- FIG. 10 shows a side view of the braking system for ATV according to the present invention with the main parts interested by braking lever driving underlined; and
- FIG. 11 shows a side view of the braking system for ATV of FIG. 10 during the left braking lever driving.

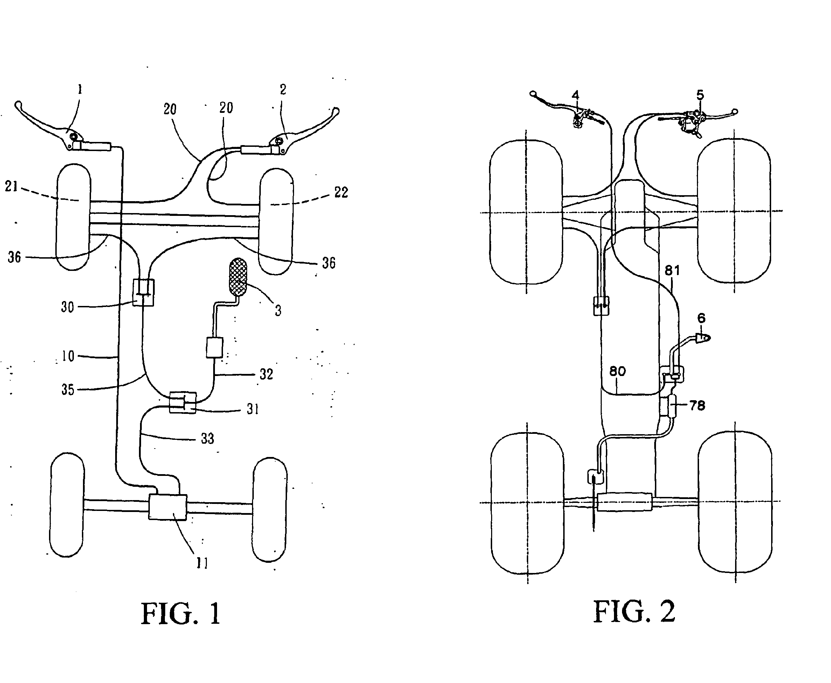

With reference to FIGs. 1 and 2, a known braking system for ATV and a braking system according to the present invention are compared. Particularly, the known braking system is mainly composed of a braking lever 1 positioned on the left side of the handlebar of the ATV adapted to operate a rear drum or disk brake 11 by cable 10, of a braking lever 2 positioned on the right side of the handlebar of the ATV adapted to operate the front drum or disk brakes 21, 22 by cables 20 and of a braking pedal 3 adapted to contemporarily operate front brakes 21, 22 and rear brake 11 by means of a first connector wire set 31 which, by means of a cable 32, shares a braking command between the rear brake 11, by means of cable 33 and a second connector wire set 30, by means of a cable 35, which shares the braking command between the left front brake 21 and the right front brake 22 by means of a respective cables 36. Therefore, it is evident that such known system is relatively complex and subject to adverse interferences among the various components that can invalidate its correct operation in time and make its assembling, and possible following interventions on it, more complex.

Contrarily, with reference to FIG. 2, the most rational lay-out of the braking system for ATV according to the present invention can be noticed: as required by such vehicles, it also mainly includes a left braking lever 4 adapted to operate a rear brake, preferably a disk brake, by means of a cable 81, a right braking lever 5 adapted to operate front brakes and a pedal brake lever 6 adapted to contemporarily operate front brakes and rear brake; according to the advantageous characteristics of the present invention, however, the operating action of an ATV user on the pedal brake lever 6 is transmitted to front and rear brakes by means of a braking system according to the present invention, herein below described in greater detail, which replaces the first connector wire set 31 of the aforesaid prior art with a simpler, more rational and more reliable braking sharing system between a master cylinder 78 of the rear brake and a braking cable 80 of the front brakes.

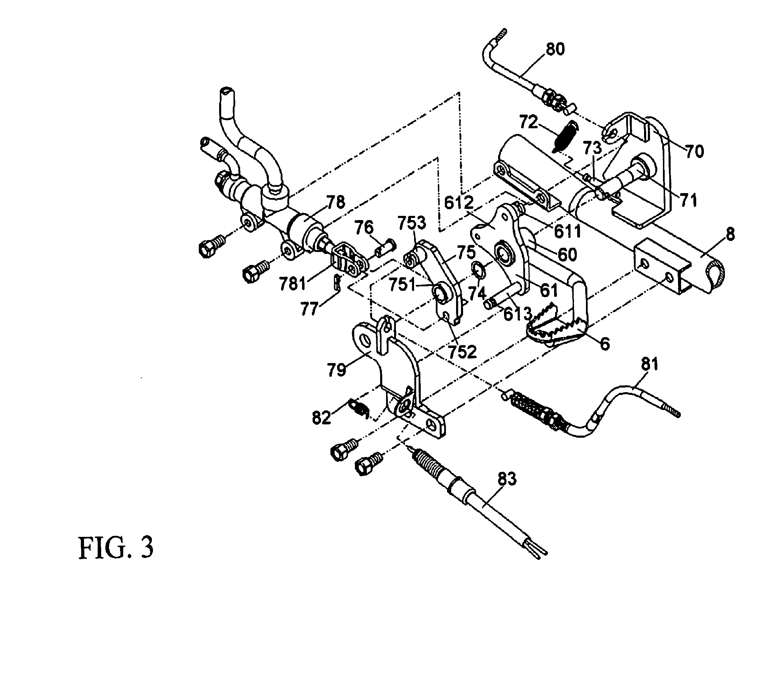

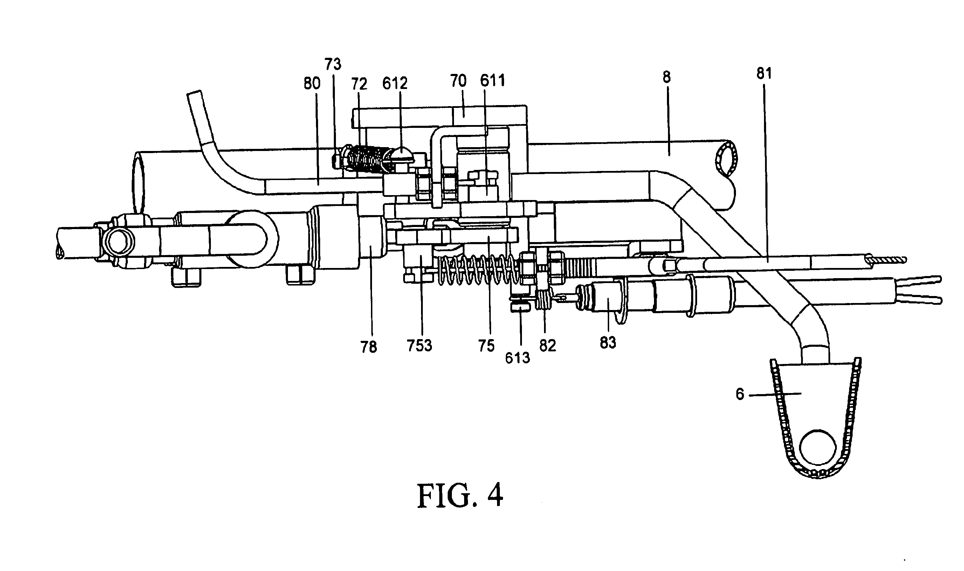

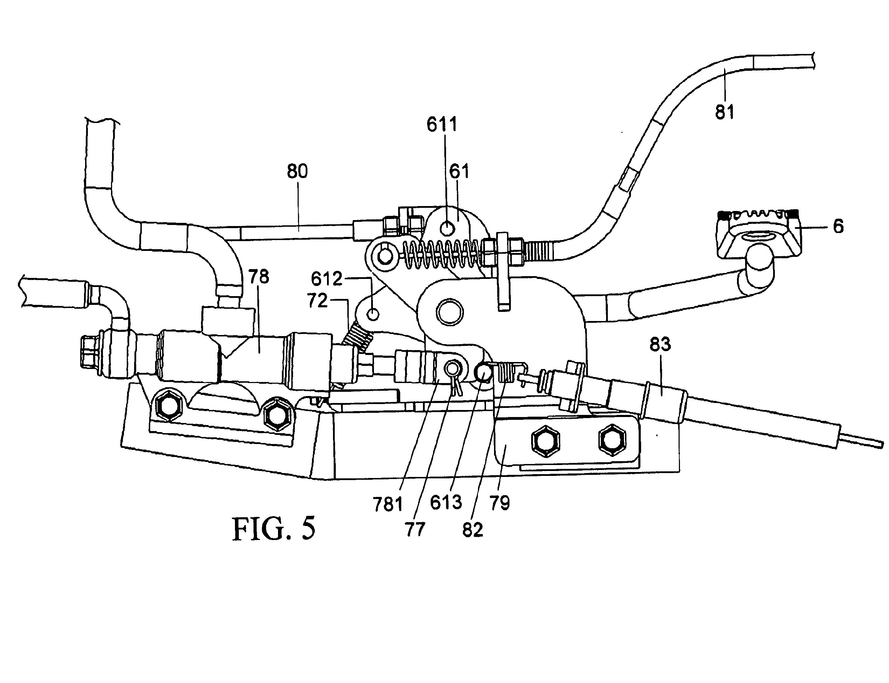

Particularly, with reference to FIGs. 3, 4 and 5, it is possible to see the braking system for ATV according to the present invention. It is composed by a master plate 70 connected to a frame-body tube 8 of an ATV, for example by means of welding, such master plate 70 being provided with a connecting shaft 71 and a first connecting holder 73 of a return spring 72, described herein below. A pedal brake lever holder 61 is rotatably mounted in the connecting shaft 71, and a pedal brake lever 6 is connected on a spacer of the pedal brake lever 60 of such pedal brake lever holder 61; moreover, the pedal brake lever holder 61 is provided with a second connecting holder 613 of a switch spring 82, described herein below, a third connecting holder 612 of the return spring 72 and a first upper connecting holder 611 of a first braking cable 80 to operate front brakes. An hydraulic cylinder bracket 75 is rotatingly inserted in the connecting shaft 71, preferably adjacent to the pedal brake lever holder 61, by interposing, for example, a wave washer 74, such hydraulic cylinder bracket 75 being provided with a fixing pipe 751 to the connecting shaft 71, a fixing hole 752 to a master cylinder 78, described herein below, a second upper connecting holder 753 of a second braking cable 81 connected and operated by the left braking lever 4 and an abutment portion of the second connecting holder 613. The end of the connecting shaft 71 supports a rear brake cable fixed holder 79 fixed to the frame-body tube 8 and provided with a brake light switch 83 connected and operated by the switch spring 82. The master cylinder 78, provided to operate the rear brake, is preferably connected to the fixing hole 752 by means of a fork connector 781 with relative parallel pin 76 and locking cotter pin 77. In the Figures, a preferred embodiment of the braking system according to the present invention is shown, in which the pedal brake lever holder 61 and the hydraulic cylinder bracket 75 are inserted in the same side of the connecting shaft 71, but it is possible to maintain the same advantageous functionalities and characteristics of the present invention using a connecting shaft 71 passing through the master plate 70, and respectively providing the pedal brake lever holder 61 and the hydraulic cylinder bracket 75 on a side and on the opposite side of the master plate 70 itself.

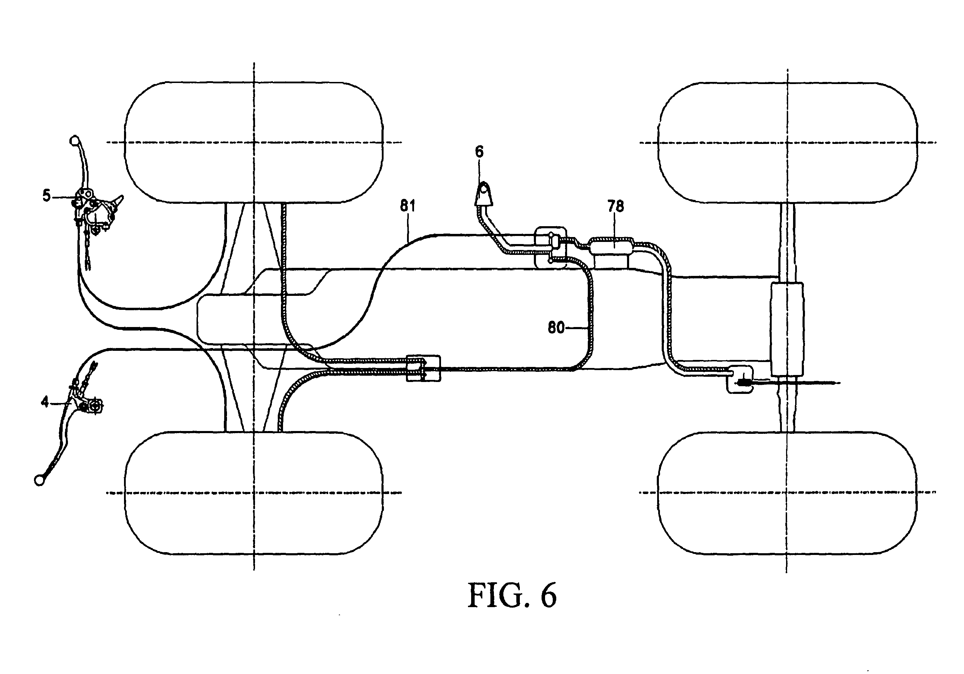

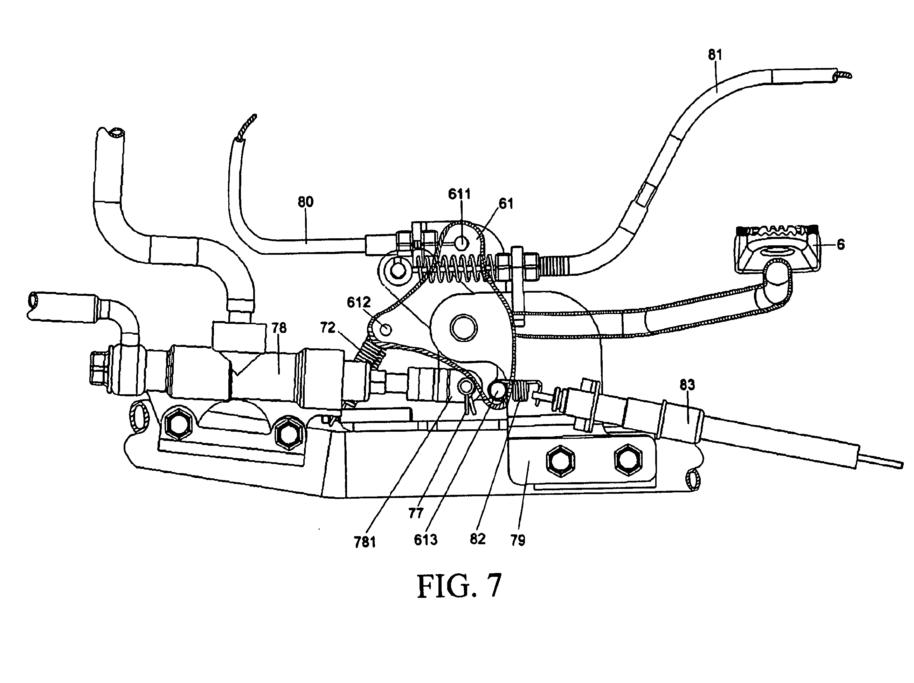

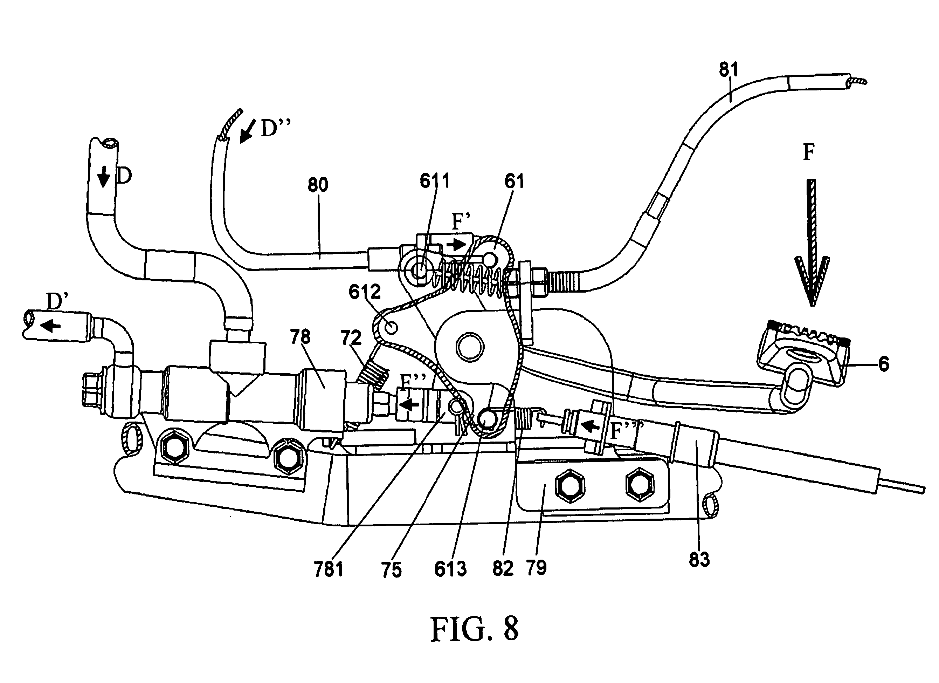

Now, with reference to FIGs. 6 to 11, the braking system operation according to the present invention is shown. Particularly, FIGs. 6, 7 and 8 show the operation of the braking system according to the present invention in case of pedal brake lever 6 driving; FIG. 6 shows a lay-out of the braking system according to the present invention in which the components of the braking system affected by the actuation of the pedal brake lever 6 are underlined in black; FIG. 7 shows particularly the rest position of the braking system according to the present invention, in which the components of the braking system affected by the driving of the pedal brake lever 6 are underlined with slanted lines; FIG. 8 shows the operation of the braking system according to the present invention during the pedal brake lever 6 driving: in fact, by applying a strength according to arrow F on the pedal brake lever 6, this makes the pedal brake lever holder 61, connected to such pedal brake lever 6, rotate around the connecting shaft 71 and accordingly the first braking cable 80 is pulled according to the arrow F' driving, in this way, the ATV's front brakes. Simultaneously, the rotation of the pedal brake lever holder 61 makes the second connecting holder 613 abut against the abutment portion of the hydraulic cylinder bracket 75, concurrently making it also rotate around the connecting shaft 71, such rotation bringing about the push on a piston of the master cylinder 78 according to arrow F'' and accordingly generating a driving pressure D', fed by a hydraulic circuit having a flow D, which operates the rear brake; simultaneously, the switch spring 82, because of the rotation of the hydraulic cylinder bracket 75, operates the brake light switch 83 which turns on the rear ATV stoplights. Stopping the strength F, the return spring 72, loaded by the rotation of the pedal brake lever holder 61 and the switch spring 82, loaded by the rotation of the hydraulic cylinder bracket 75, take the braking system to its rest position again.

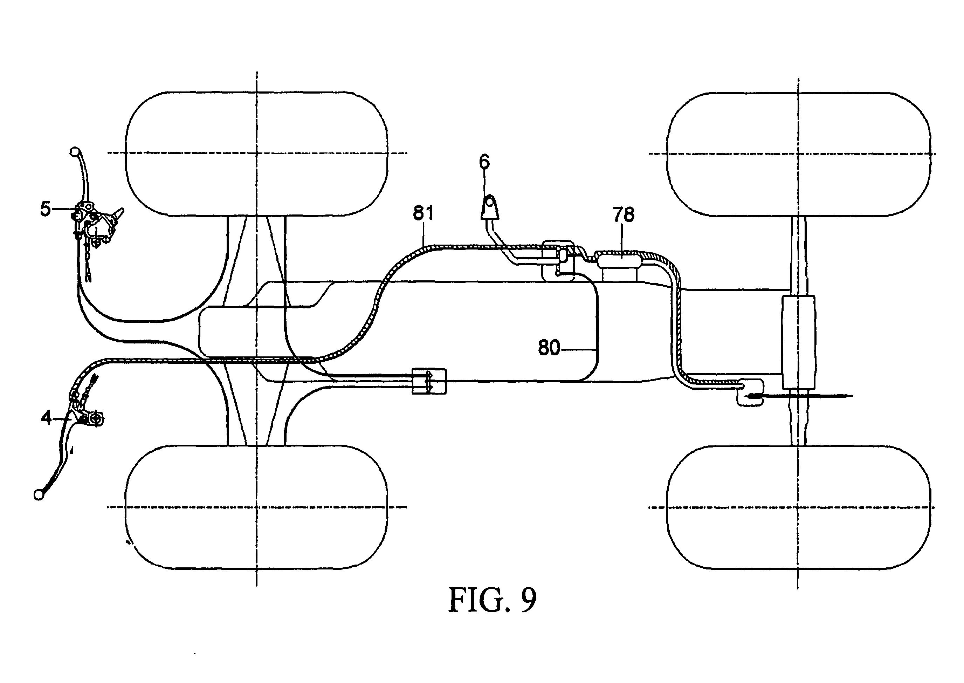

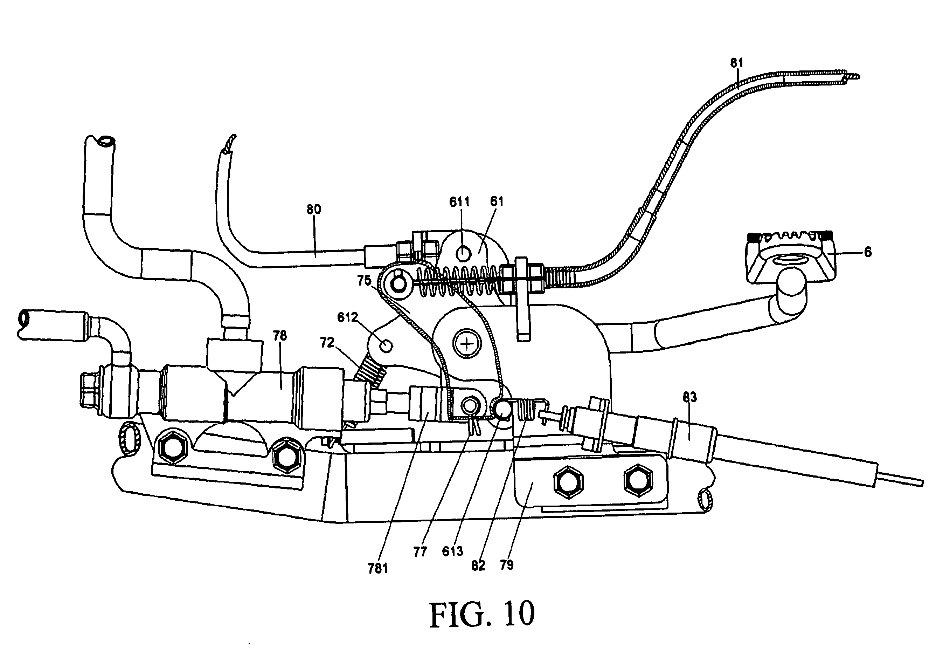

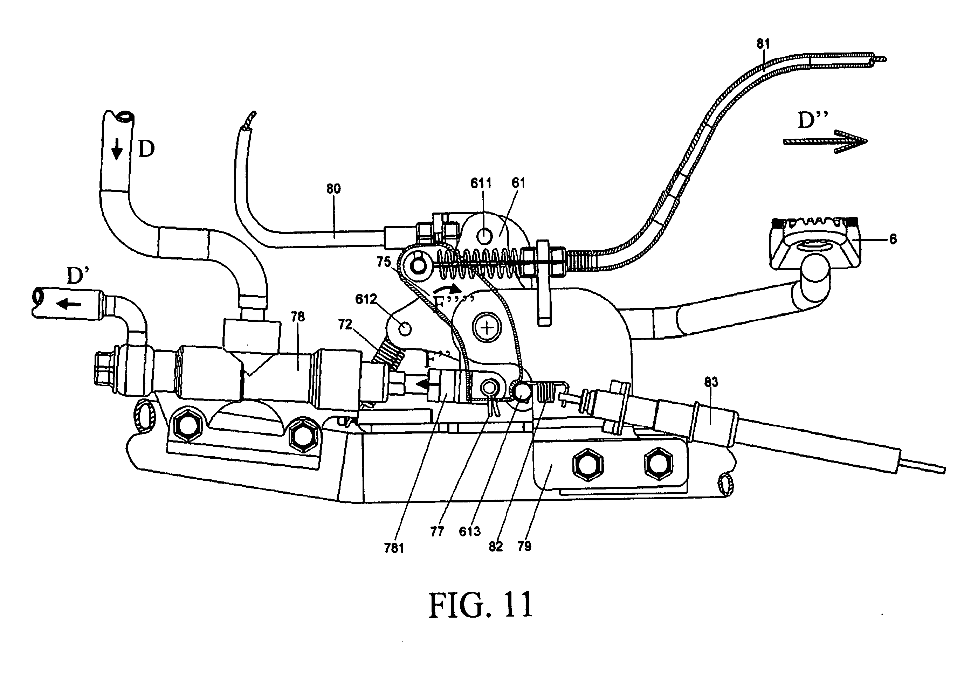

FIGs. 9, 10 and 11 show the operation of the braking system according to the present invention in case of left braking lever 4 driving; FIG. 9 shows a lay-out of the braking system according to the present invention in which the components of the braking system affected by the left braking lever 4 driving are underlined in black; FIG. 10 shows particularly the rest position of the braking system according to the present invention, in which the components of the braking system affected by the left braking lever 4 driving are underlined with slanted lines; FIG. 11 shows the operation of the braking system according to the present invention during the left braking lever 4 driving: in fact, by applying a traction strength according to the arrow D'' on the second braking cable 81 by means of left braking lever 4 driving, the hydraulic cylinder bracket 75 is made rotate around the connecting shaft 71 according to arrow F'''', such rotation bringing about a pushing action of the master cylinder 78 piston according to arrow F" and accordingly generating a driving pressure D', fed by a hydraulic circuit having a flow D, which operates the rear brake; simultaneously, the switch spring 82, because of the rotation of the hydraulic cylinder bracket 75, operates the brake light switch 83 that it turns on the ATV rear stoplights. Stopping the strength D'', the switch spring 82, loaded by the rotation of the hydraulic cylinder bracket 75, takes the braking system to its rest position again.

The advantages of a braking systems for ATV according to the present invention are numerous: firstly, in such system the overall connection becomes much more simplified compared with known techniques, bringing about a greater economic convenience and a greater safety of use of the ATV; moreover, with the system according to the present invention, adjusting and repairing the braking cables result to be simpler.

## Claims

1. Braking system for All Terrain Vehicles (ATV), comprising a left braking lever (4) and a pedal brake lever (6), **characterized in that** it further comprises:
- a master plate (70) connectable to a frame-body tube (8) of an ATV, said master plate (70) being provided with a connecting shaft (71) and a first connecting holder (73) of a return spring (72);
- a pedal brake lever holder (61) rotatingly inserted in said connecting shaft (71), said pedal brake lever holder (61) being provided with a third connecting holder (612) of said return spring (72), a first upper connecting holder (611) of a first braking cable (80) for driving front brakes of said ATV and a second connecting holder (613), said pedal brake lever holder (61) being connected to said pedal brake lever (6);
- an hydraulic cylinder bracket (75) rotatably mounted on said connecting shaft (71), said hydraulic cylinder bracket (75) being provided with a fixing hole (752) of a master cylinder (78) for operating at least a rear brake of said ATV, a second upper connecting holder (753) of a second braking cable (81) operated by said left braking lever (4) of said ATV and an abutment portion of said second connecting holder (613); and
- a rear brake cable fixed holder (79) supported on an end of said connecting shaft (71), said rear brake cable fixed holder (79) being fixable to said frame-body tube (8).

2. Braking system according to claim 1, **characterized in that** a switch spring (82) is connected to said second connecting holder (613), said fixed support (79) being provided with a brake light switch (83) connected and operated by said switch spring (82).

3. Braking system according to claim 1, **characterized in that** said pedal brake lever holder (61) is adjacent to said hydraulic cylinder bracket (75) by interposing a wave washer (74).

4. Braking system according to claim 1, **characterized in that** said pedal brake lever holder (61) and said hydraulic cylinder bracket (75) are inserted on one side and on an opposite side of said connecting shaft (71) passing through said master plate (70).

## Patentansprüche

1. Bremssystem vor allem für Geländewagen All Terrain Vehicles (ATV) mit einem linken Bremshebel (4) und einem Bremspedal (6), das **dadurch gekennzeichnet ist**, folgendes zu enthalten:
- eine Hauptplatte (70), die mit einem Rahmenrohr (8) eines ATV verbunden werden kann, diese Hauptplatte (70) ist mit einer Verbindungswelle (71) und einer ersten Verbindungshalterung (73) einer Rückzugsfeder (72) ausgestattet;
- eine Bremspedalhalterung (61), die drehend auf der genannten Verbindungswelle (71) befestigt ist, diese Bremspedalhalterung (61) ist mit einer dritten Verbindungshalterung (612) der genannten Rückzugsfeder (72), einer ersten oberen Verbindungshalterung (611), einem ersten Bremskabel (80) zur Steuerung der Vorderbremsen des genannten ATVs und einer zweiten Verbindungshalterung (613) ausgestattet, die genannte Bremspedalhalterung (61) ist mit dem genannten Bremspedal (6) verbunden;
- ein hydraulischer Zylinderarm (75), der drehend auf der genannten Verbindungswelle (71) montiert ist, dieser hydraulische Zylinderarm (75) ist mit einer Befestigungsöffnung (752) eines Hauptsteuerzylinders (78) von mindestens einer hinteren Bremse des genannten ATVs, einer zweiten oberen Verbindungshalterung (753), einem zweiten Bremskabel (81), das durch den genannten linken Bremshebel (4) des genannten ATVs angetrieben wird, und einem Anschlagteil der genannten zweiten Verbindungshalterung (613) ausgestattet; und
- eine feste Halterung des hinteren Bremskabels (79), das auf einem Endstück der genannten Verbindungswelle (71) aufgestützt ist, diese feste Halterung des hinteren Bremskabels (79) kann an dem besagten Rahmenrohr (8) befestigt werden.

2. Bremssystem gemäß Patentanspruch 1, das **dadurch gekennzeichnet ist, dass** eine Schaltfeder (82) mit der genannten zweiten Verbindungshalterung (613) verbunden ist, diese feste Halterung (79) ist mit einem Bremslichtschalter (83) ausgestattet, der mit der genannten Schaltfeder (82) verbunden ist und von ihr gesteuert wird.

3. Bremssystem gemäß Patentanspruch 1, das **dadurch gekennzeichnet ist, dass** sich die genannte Bremspedalhalterung (61) durch Dazwischenlegen einer gewellten Scheibe (74) neben dem genannten hydraulischen Zylinderarm (75) befindet.

4. Bremssystem gemäß Patentanspruch 1, das **dadurch gekennzeichnet ist, dass** die genannte Bremspedalhalterung (61) und der genannte hydraulische Zylinderarm (75) auf einer Seite und auf der gegenüberliegenden Seite der genannten Verbindungswelle (71) eingesetzt sind, die die genannte Hauptplatte (70) durchläuft.

## Revendications

1. Système de freinage, en particulier pour les véhicules tous terrains All Terrain Vehicles (ATV), comprenant un levier de freinage gauche (4) et un levier de freinage à pédale (6), **caractérisé en ce qu'**il comprend:
- une plaque principale (70) à relier à un tube d'acier (8) d'un ATV, ladite plaque principale (70) étant pourvue d'un arbre de raccord (71) et d'un premier support (73) de raccordement d'un ressort de retour (72);
- un support de levier de freinage à pédale (61) claveté en mode pivotant sur ledit arbre de raccord (71), ledit support de levier de freinage à pédale (61) étant muni d'un troisième support (612) de raccordement dudit ressort de retour (72), d'un premier support de raccordement supérieur (611) d'un premier câble de freinage (80) et commande des freins avant dudit ATV et d'un second support de raccordement (613), ledit support de levier de freinage à pédale (61) étant relié audit levier de freinage à pédale (6);
- un bras de vérin hydraulique (75) claveté en mode pivotant sur ledit arbre de raccord (71), ce bras de vérin hydraulique (75) comportant un orifice de fixation (752) d'un cylindre principal (78) de commande d'au moins un frein arrière dudit ATV, d'un second support de raccordement supérieur (753) d'un second câble de freinage (81) actionné par ledit levier de freinage gauche (4) dudit ATV et d'une portion de butée dudit second support de raccordement (613); et
- un support fixe de câble de freinage arrière (79) supporté sur une extrémité terminale dudit arbre de raccord (71), ledit support fixe de câble de freinage arrière (79) pouvant être fixé au tube du bâti (8).

2. Système de freinage selon la revendication 1, **caractérisé en ce que** un ressort de commutation (82) est relié audit second support de raccordement (613), ledit support fixe (79) étant pourvu d'un commutateur de feu de freinage (83) relié et commandé par ledit ressort de commutation (82).

3. Système de freinage selon la revendication 1, **caractérisé en ce que** ledit support de levier de freinage à pédale (61) est adjacent au bras de vérin hydraulique (75) au moyen de l'interposition d'une rondelle ondulée (74).

4. Système de freinage selon la revendication 1, **caractérisé en ce que** ledit support de levier de freinage à pédale (61) et ledit bras de vérin hydraulique (75) sont insérés sur un côté et sur le côté opposé dudit arbre de raccord (71) passant par ladite plaque principale (70).
